# EUROPEAN PATENT SPECIFICATION

(11) **EP 1 419 880 B1**
(45) Date of publication and mention of the grant of the patent: **18.08.2004**
(21) Application number: 02380232.5
(22) Date of filing: 07.11.2002
(51) Int. Cl.: B32B 5/06, B29B 15/10, B29C 43/18, B32B 31/00, B60R 13/02

(54) **Procedure for manufacturing a dressing for inner linings**
Verfahren zur Herstellung eines Innenverkleidungsteils
Procédé pour la fabrication d'un élément de garniture intérieur

(43) Date of publication of application: 19.05.2004
(73) Proprietor: Grupo Antolin Ingenieria, S.A., E-09007 Burgos (ES)
(72) Inventor: Mirones Gomez, Ramon, 09007 Burgos (ES); Ariznavarreta, Anselmo, 09190 Villatoro (Burgos) (ES)
(74) Representative: Davila Baz, Angel

(56) References cited:
- EP-A- 0 285 338
- EP-A- 0 671 259
- WO-A-01/03916
- ES-A- 2 157 725
- US-A- 4 828 910
- US-A- 5 614 285

## Description

The present invention relates to a process for manufacturing a dressing for automobile interiors, particularly for automobile roofs, as well as to the dressing obtained thereby.

More specifically, the process of the invention concerns the manufacture of dressings consisting of a bedding with an intermediate layer made of a low-density material, at least one reinforcement layer attached to said intermediate layer by a resin, and a coating applied covering the reinforcement layers.

Dressings for the aforementioned purpose must have good thermal insulation properties, as well as good acoustic absorption and insulation properties. In addition, the mechanical demands on such products are constantly increasing.

In dressings obtained from beddings the layer made of a low-density material is generally of polyurethane foam or the like, and the union between the various layers is effected by a resin. Also known are dressings in which the low-density material consists of a porous fabric with fibres of different types, such as glass or polyester.

Regardless of the nature of each low-density intermediate layer, there exist alternatives for the construction of the bedding involving placing different additional layers on either surface of the intermediate layer, the different nature of these additional layers, the type of resin used, etc.

There also exist alternatives in the manufacturing processs, which always end by subjecting the bedding to a shaping process in a hot press where the resins used to join the various layers undergo polymerisation.

Dressings and manufacturing processes for them with the above-described features are already described in US Patents Nos. 4828910, 4840832, 6291370, in EP-0832787 and in ES-2157725.

In all the above cases, the adhesive used to join the various layers must be applied at the time of shaping the bedding; in addition, this adhesive fixes the shape when it polymerises. This double function of the adhesive requires that a suitable amount be provided on the surface or surfaces of the layer of low-density material in order to impregnate it sufficiently. For this reason, the impregnation operation must take place at high temperatures and last a relatively long time.

In addition, the nature of the intermediate layer made of a low-density material can lead to handling problems when initiating the dressing manufacturing process, as it lacks stiffness in all senses.

The object of the present invention is to eliminate the above-described problems by simplifying the manufacturing process and providing a final product with improved mechanical properties, even with a smaller thickness of the bedding.

US-A-4 828 910 discloses a process substantially in accordance with the preamble of claim 1 of the present patent.

EP-A-0 671 259 discloses a process in which a protective sheet of paper is used.

EP-A-0285 338 discloses bonding of fibres by thermofusing.

ES-A-2 157 725 discloses the use of barrier layers.

According to the present invention, an intermediate layer will be provided that consists of a semi-rigid fibrous blanket, preferably with a uniform grammage. The semi-rigid nature of the intermediate layer facilitates its handling and ensures that the grammage remains uniform throughout its surface during the entire manufacturing process of the bedding, thereby improving the final properties of the product thus obtained and simplifying the control over the manufacturing process itself.

In the process of the invention, on each surface of the aforementioned semi-rigid fibrous blanket is applied: a) a thermosetting resin, for example with a roller gluer; b) a reinforcement layer made of a fibrous material; c) a protective sheet covering at least one of the reinforcement layers, to determine the concealed surface of the bedding; and d) a decorative lining on the opposite side to determine the exposed surface.

The reinforcement layers can be made of fibreglass, although they can also be made of any other fibres that provide the same reinforcement function.

Before applying the layers of reinforcement material the semi-rigid fibrous blanket can be made to pass between two rollers that improve the impregnation and distribution of the resin previously applied on both surfaces.

After the resin and the reinforcement layer have been applied onto each layer of the fibrous blanket, a protective sheet is applied covering one of the reinforcement layers to determine the concealed surface. This layer is attached using the same resin used to bond the reinforcement layer, as the latter layer is permeable and the adhesive can pass through it. The protective sheet can be made of various different materials, such as paper, unwoven plant fabrics, plastic sheets, etc.

On the opposite surface the decorative lining layer is applied to determine the visible surface. Depending on the type of decorative lining used it may be necessary in some cases to incorporate an additional barrier layer between the reinforcement layer and the decorative lining to prevent the adhesive from passing through the decorative lining and affecting its final appearance.

If no such barrier layer is placed between the decorative lining and the reinforcement layer, said lining is attached with the same resin used for the reinforcement layer. If a barrier layer is provided it may be formed of a thermoplastic material, so that the decorative lining can be bonded by fusing the barrier wall with a high temperature, for example in the final shaping press.

As described above, after the bedding is obtained the assembly is shaped in a hot press where the assembly is further stiffened in its final shape as the thermosetting resin or resins incorporated during the shaping process of the bedding polymerise completely, thereby consolidating the interior structure by a joint action of pressure and temperature in a mould with the final shape desired for the lining.

The intermediate layer made of a low-density material consists of a wadding or blanket made of a fibrous material, preferably one with a uniform grammage, which is subjected to a process that provides a certain extent of preliminary bonding of its fibres, allowing to obtain the semi-rigid state desired. This preliminary bonding of the fibres of the centre wadding can be effected in two ways: by dipping it in a bath of thermoplastic resin in liquid, molten state; or by interlinking the fibres by their rearrangement with a mechanical punching process. This preliminary bonding provides a degree of connection among the wadding fibres that allows its handling during the following stages of the process, maintaining a uniform grammage of its surface as mentioned above.

In accordance with the invention and thereby the characterising portion of claim 9, the blanket is subjected to a subsequent bath in a thermosetting resin providing part of the stiffness and self-supporting nature that the centre wadding and the dressing to be obtained will have at the end of the manufacturing process. For this purpose, after the wadding is soaked with said resin it is subjected to a setting period in which a total or partial polymerisation of the thermosetting resin takes place. If the polymerisation is only partial the reaction will be later completed by the heat of the hot press used in the final shaping of the lining, thus obtaining the final stiffness required of the finished product.

All of the above-described characteristics and advantages of the invention, as well as others pertaining to the invention, will be better understood in view of the following description of an example of an embodiment made with reference to the accompanying drawings, where:
Figure 1 shows a schematic sectional view of the composition of the bedding from which the dressing of the invention is obtained.
Figure 2 is a schematic view of the process for manufacturing the dressing of the invention.
Figure 3 is a manufacturing scheme, similar to that of figure 2, corresponding to the production of a semi-rigid fibrous blanket that forms the intermediate layer of the bedding of figure 1.

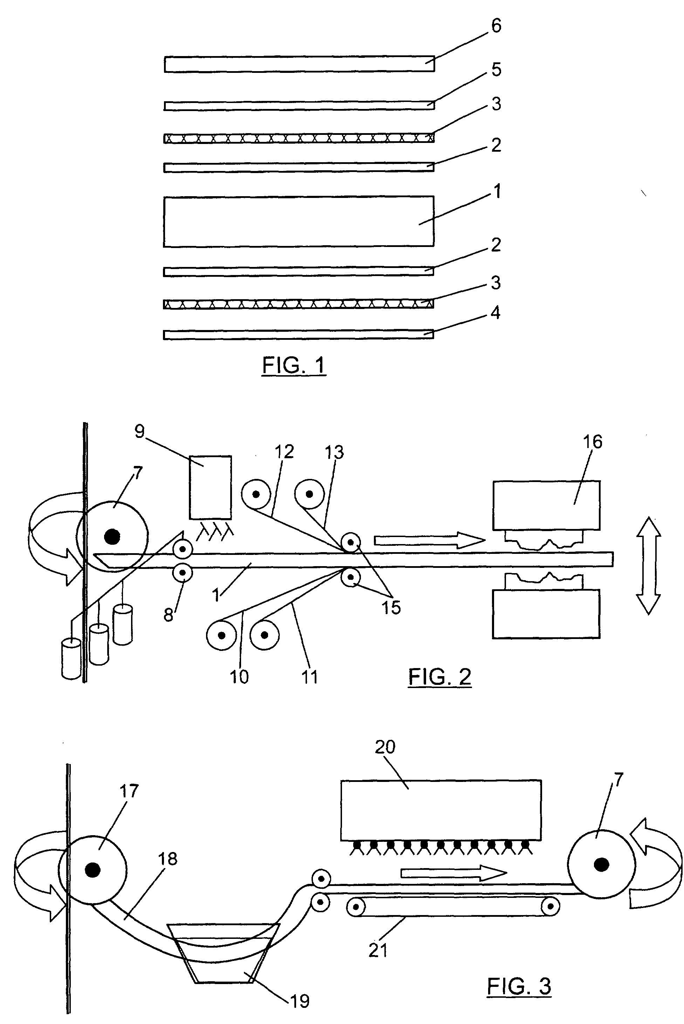

Figure 1 shows a schematic representation of the composition of a bedding with which the dressing of the invention can be obtained.

This bedding is comprised of an intermediate layer 1 consisting of a semi-rigid fibrous blanket, a layer or coat of thermosetting resin applied on each surface of the semi-rigid fibrous blanket 1, a reinforcement layer 3 made of fibrous material applied over the layer or coating 2 of thermosetting resin, a protective sheet 4 applied over one of the reinforcement layers 3 to determine the concealed surface of the lining, a barrier layer 5 on the reinforcement layer 3 on the opposite side and a decorative lining layer 6 over the barrier layer 5 to determine the exposed surface.

The intermediate layer 1 can consist of a wadding of fibrous material, made with artificial fibres such as polyethylene teraphthalate, polyamide, polypropylene, vegetable fibres, etc. subjected to a punching process, and impregnated with thermoplastic resin and later with thermosetting resin. The punched fibres can be virgin or recycled fibres.

The reinforcement layer 3 can consist of glass fibres, although other fibres providing the same reinforcement function can also be used.

The barrier layer 4 can consist of a plastic sheet, an adhesive strip or a non-fabric.

The manufacturing process for the bedding of figure 1 is described with reference to figure 2.

The semi-rigid fibrous blanket used to form the bedding can have the form of a roll 7 from which the blanket is pulled out, applying the thermosetting resin layers on its surfaces with, for example, a roller gluer 8. Then is applied the reinforcement layer 3 made of a fibrous material, such as with glass fibres, which can be supplied on one side as loose fibres 9, as a mat 10 or with any other arrangement or structure of the fibres. On one side is then applied the protective sheet 11, for example made of paper, that determines the exposed sheet or surface 4 of figure 1. On the opposite side is applied on the reinforcement layer a strip or sheet 12 that determines the barrier layer 5 of figure 1, on top of which will be applied a decorative layer 13 that determines the exposed surface or layer 6 of figure 1.

The sandwich structure thus obtained can be passed between two rollers 15, for example made of rubber, that allows the resin supplied with the rollers 8 to penetrate further in the blanket 1 and better impregnate the fibres 9 with the resin.

Lastly, the bedding obtained is moulded in a press 16, for example at a temperature between 120°C and 190°C for a moulding time between 15 seconds and 180 seconds, in order to polymerise the resin, obtaining the desired shape of the dressing to be manufactured.

Next described with reference to figure 3 is a possible process for obtaining the fibrous semi-rigid blanket that constitutes the intermediate layer 1.

A coil 17 is used to obtain the fibrous blanket 18, which can have previously undergone a punching process. The blanket 18 is passed through a bath 19 of thermosetting resin, although it may have undergone a punching process previously. The impregnated blanket 18 can then be passed through a kiln 20 by means of the conveyor belt 21, where the resin is completely or partially polymerised to initiate the process described with reference to figure 2, then rewinding it to obtain the coil 7 that is used as the starting point for said process or that can be cut into plates.

If the resin is only partially polymerised in the kiln 20, the total polymerisation will take place in the press 16 of the end of the process of figure 2, as well as the resin applied at the base of the manufacturing of the bedding described with reference to figure 2.

In the manufacturing process for the bedding described with reference to figure 2, the reinforcement layer 10 can be eliminated on the side of the concealed surface. It is also possible to eliminate the barrier wall 5 of figure 1, depending on the type of lining 6 used. The decorative lining 13, figure 2, can be placed on the bedding before or after applying the rollers 15.

The glass fibres 9 used in the process of figure 2 can be replaced by natural fibres, such as jute, hemp, flax, sisal, etc., or applied in the form of a glass fibre blanket.

Also in the process of figure 2 a kiln can be employed before the press 16 and after the rollers 15 to preheat the bedding and shorten the shaping time in the press 16. With the same purpose, the rollers 15 could be heated to obtain a degree of polymerisation of the bedding before it arrives at the press 16, thereby preventing the fall or detachment of the reinforcement fibres and shortening the time in the press 16.

## Claims

1. Process for manufacturing a dressing for automobile interiors involving the formation of a bedding that includes at least one intermediate layer (1) made of a low-density material, at least one reinforcement layer (3) applied onto at least one of the surfaces of the intermediate layer, to which it is attached by a thermosetting resin (2), and a decorative lining layer (6) on one of the free surfaces, the process comprising the steps of:
providing an intermediate layer (1);
- applying a thermosetting resin (2) onto each surface of said intermediate layer (1);
- applying a reinforcement layer (3) made of fibrous material onto at least one of the surfaces of the intermediate layer;
- applying at least one protective sheet (4) onto one of the surfaces of the product obtained in the preceding step, to determine a concealed surface of the bedding;
- applying onto the opposite surface, a decorative lining layer (6) to determine an exposed surface of the bedding; and
subjecting the bedding thus obtained to a shaping or moulding process in a hot press (16), thereby also polymerising the thermosetting resin;
wherein the step of providing an intermediate layer (1) comprises the steps of:
- providing a blanket (18) made of a fibrous material; and
- subjecting the blanket (18) to a preliminary bonding process that provides a certain extent of bonding of the fibres,
**characterised in that**
said preliminary bonding process includes the step of impregnating the blanket (18) with a further thermosetting resin (19) and subjecting the blanket to a subsequent setting process to cause at least a partial polymerisation of said further thermosetting resin so as to make the blanket semi-rigid in order to facilitate the handling of the blanket (18) during the following stages of the process.

2. Process according to claim 1, wherein said at least one reinforcement layer (3) is made of glass fibres.

3. Process according to claim 1, wherein said at least one reinforcement layer (3) is made of natural or artificial fibres.

4. Process according to any of the preceding claims, wherein the protective sheet (4) is a paper sheet.

5. Process according to any of the preceding claims, wherein, before the step of subjecting the bedding to a shaping or moulding process in a hot press (16), the bedding is passed between a pair of rollers (15) that partially compress said bedding to make the resin (2) applied on the surfaces of the blanket (18) penetrate said blanket and impregnate said at least one reinforcement layer (3).

6. Process according to claim 5, wherein said rollers (15) are heated.

7. Process according to any of the preceding claims, wherein the preliminary bonding process comprises the step of subjecting the blanket (18) to impregnation with a molten thermoplastic resin.

8. Process according to any of the preceding claims, wherein the blanket (18) includes thermofusing fibres.

9. Process according to any of the preceding claims, wherein the preliminary bonding process comprises the step of subjecting the fibres of the blanket (18) to a mechanical punching operation.

10. Process according to claim 7, wherein the step of impregnating the blanket with a further thermosetting resin (19) is performed after the step of subjecting the blanket to impregnation with a molten thermoplastic resin.

11. Process according to claim 9, wherein the step of impregnating the blanket with a further thermosetting resin (19) is performed after the step of subjecting the fibres of the blanket (18) to a mechanical punching operation.

12. Process according to any of the preceding claims, further comprising the step of applying, between the reinforcement layer (3) and the decorative lining layer (6), a barrier layer (5) made of an adhesive strip or sheet.

13. Process according to claim 12, wherein the barrier layer (5) is made of a thermoplastic material, and in that the decorative lining layer (6) is bonded to the bedding by means of fusing the barrier layer (5) by heating.

14. Process according to any of claims 1-11, wherein the decorative lining layer is adhered to the bedding by the thermosetting resin (2).

## Patentansprüche

1. Verfahren für die Herstellung einer Ausstattung für Kraftfahrzeuginnenräume, umfassend die Bildung einer Schichtung, die wenigstens eine Zwischenschicht (1), die aus einem Material niedriger Dichte hergestellt ist, wenigstens eine Verstärkungsschicht (3), die auf wenigstens eine der Oberflächen der Zwischenschicht aufgebracht ist, an welcher sie mittels eines wärmehärtbaren Harzes (2) angebracht ist, und eine dekorative Auskleidungsschicht (6) an einer der freien Oberflächen enthält, wobei das Verfahren die Schritte umfasst:
- eine Zwischenschicht (1) zu schaffen;
- ein wärmehärtbares Harz (2) auf jede Oberfläche der Zwischenschicht (1) aufzubringen;
- eine aus faserigem Material hergestellte Verstärkungsschicht (3) auf wenigstens eine der Oberflächen der Zwischenschicht aufzubringen;
- wenigstens eine dünne Schutzschicht (4) auf eine der Oberflächen des Erzeugnisses, das in dem vorhergehenden Schritt erhalten worden ist, aufzubringen, um eine verborgene Oberfläche der Schichtung festzulegen;
- eine dekorative Auskleidungsschicht (6) auf die gegenüberliegende Oberfläche aufzubringen, um eine freiliegende Oberfläche der Schichtung festzulegen; und
- die auf diese Weise erhaltene Schichtung einem Bearbeitungs- oder Formungsverfahren in einer Heißpresse (16) zu unterwerfen, wodurch außerdem das wärmehärtbare Harz polymerisiert wird;
wobei der Schritt der Schaffung einer Zwischenschicht (1) die Schritte umfasst:
- eine Lage (18), die aus einem faserigen Material hergestellt ist; bereitzustellen und
- die Lage (18) einem vorbereitenden Verfestigungsverfahren zu unterwerfen, das für einen bestimmten Verfestigungsgrad der Fasern sorgt,
**dadurch gekennzeichnet, dass**
das vorbereitende Verfestigungsverfahren den Schritt umfasst, die Lage (18) mit einem weiteren wärmehärtbaren Harz (19) zu imprägnieren und sie einem nachfolgenden Aushärtungsverfahren zu unterwerfen, um wenigstens eine teilweise Polymerisation des Weiteren wärmehärtbaren Harzes hervorzurufen, sodass die Lage halbstarr gemacht wird, um die Handhabung der Lage (18) während der nachfolgenden Schritte des Verfahrens zu erleichtern.

2. Verfahren nach Anspruch 1, bei dem wenigstens eine Verstärkungsschicht (3) aus Glasfasern hergestellt ist.

3. Verfahren nach Anspruch 1, bei dem wenigstens eine Verstärkungsschicht (3) aus Natur- oder Kunstfasern hergestellt ist.

4. Verfahren nach einem der vorhergehenden Ansprüche, bei dem die dünne Schutzschicht (4) ein Papierbogen ist.

5. Verfahren nach einem der vorhergehenden Ansprüche, bei dem die Schichtung vor dem Schritt, in dem sie einem Bearbeitungs- oder Formungsverfahren in einer Heißpresse (16) unterworfen wird, zwischen einem Paar Walzen (15) hindurchläuft, welche die Schichtung teilweise pressen, um das Harz (2), das auf die Oberflächen der Lage (18) aufgebracht ist, in die Lage eindringen zu lassen und wenigstens eine Verstärkungsschicht (3) zu imprägnieren.

6. Verfahren nach Anspruch 5, bei dem die Walzen (15) beheizt sind.

7. Verfahren nach einem der vorhergehenden Ansprüche, bei dem das vorbereitende Verfestigungsverfahren den Schritt umfasst, die Lage (18) einer Imprägnierung mit einem geschmolzenen thermoplastischen Harz zu unterwerfen.

8. Verfahren nach einem der vorhergehenden Ansprüche, bei dem die Lage (18) unter Wärmeeinwirkung schmelzende Fasern enthält.

9. Verfahren nach einem der vorhergehenden Ansprüche, bei dem das vorbereitende Verfestigungsverfahren den Schritt umfasst, die Fasern der Lage (18) einem mechanischen Stanzvorgang zu unterwerfen.

10. Verfahren nach Anspruch 7, bei dem der Schritt des Imprägnierens der Lage mit einem weiteren wärmehärtbaren Harz (19) nach dem Schritt ausgeführt wird, in dem die Lage einem Imprägnieren mit einem geschmolzerien thermoplastischen Harz unterworfen wird.

11. Verfahren nach Anspruch 9, bei dem der Schritt des Imprägnierens der Lage mit einem weiteren wärmehärtbaren Harz (19) nach dem Schritt ausgeführt wird, in dem Fasern der Lage (18) einem mechanischen Stanzvorgang unterworfen werden.

12. Verfahren nach einem der vorhergehenden Ansprüche, ferner umfassend den Schritt des Aufbringens einer Barrierenschicht (5), die aus einem Klebestreifen oder aus einer Klebefolie hergestellt ist, zwischen der Verstärkungsschicht (3) und der dekorativen Auskleidungsschicht (6).

13. Verfahren nach Anspruch 12, bei dem die Barrierenschicht (5) aus einem thermoplastischen Material hergestellt ist und bei dem die dekorative Auskleidungsschicht (6) mittels Aufschmelzen der Barrierenschicht (5) durch Erwärmen mit der Schichtung verbunden wird.

14. Verfahren nach einem der Ansprüche 1 bis 11, bei dem die dekorative Auskleidungsschicht mittels des wärmehärtbaren Harzes (2) an die Schichtung geklebt ist.

## Revendications

1. Procédé de fabrication d'un revêtement pour intérieur d'automobile comprenant la formation d'un lit comprenant au moins une couche intermédiaire (1) en un matériau de faible densité, au moins une couche de renfort (3) appliquée sur au moins l'une des surfaces de la couche intermédiaire, à laquelle elle est fixée par une résine thermodurcissable (2), et une couche de revêtement décorative (6) sur l'une des surfaces libres, le procédé comprenant les étapes suivantes :
on se procure une couche intermédiaire (1),
on applique une résine thermodurcissable (2) sur chaque surface de la couche intermédiaire (1),
on applique une couche de renfort (3) en matériau fibreux sur au moins l'une des surfaces de la couche intermédiaire,
on applique au moins une couche protectrice (4) sur l'une des surfaces du produit obtenu à l'étape précédente, pour déterminer une surface masquée du lit,
on applique, sur la surface opposée, une couche de revêtement décorative (6) pour déterminer une surface accessible du lit, et
on soumet le lit ainsi obtenu à un processus de mise en forme ou moulage dans une presse chaude (16), en polymérisant ainsi aussi la résine thermodurcissable,
dans lequel l'étape de fourniture d'un couche intermédiaire (1) comprend les étapes suivantes :
fourniture d'une couverture (18) en matériau fibreux, et
soumission de la couverture (18) à un processus de soudage préliminaire qui fournit un certain degré de liaison des fibres,
**caractérisé par le fait que** le processus de liaison préliminaire comprend l'étape d'imprégnation de la couverture (18) par une résine thermodurcissable (19) et de soumission de la couverture à un processus de durcissage subséquent pour provoquer au moins une polymérisation partielle de la résine thermodurcissable pour rendre la couverture semi-rigide afin de faciliter la manipulation de la couverture (18) pendant les étapes suivantes du procédé.

2. Procédé selon la revendication 1, dans lequel la dite au moins une couche de renfort (3) est faite de fibres de verre.

3. Procédé selon la revendication 1, dans lequel la dite au moins une couche de renfort (3) est faite de fibres naturelles ou artificielles.

4. Procédé selon l'une quelconque des revendications précédentes, dans lequel la couche protectrice (4) est une feuille de papier.

5. Procédé selon l'une quelconque des revendications précédentes, dans lequel, avant l'étape de soumission du lit à un processus de mise en forme ou moulage dans une presse chaude (16), on fait passer le lit entre une paire de rouleaux (15) qui compriment partiellement le lit pour faire que la résine (2) appliquée sur les surfaces de la couverture (18) pénètre dans la couverture et imprègne la dite au moins une couche de renfort (3).

6. Procédé selon la revendication 5, dans lequel les rouleaux (15) sont chauffés.

7. Procédé selon l'une quelconque des revendications précédentes, dans lequel le processus de liaison préliminaire comprend l'étape de soumission de la couverture (18) à une imprégnation par de la résine thermoplastique fondue.

8. Procédé selon l'une quelconque des revendications précédentes, dans lequel la couverture (18) comprend des fibres à thermofusion.

9. Procédé selon l'une quelconque des revendications précédentes, dans lequel le processus de liaison préliminaire comprend l'étape de soumission des fibres de la couverture (18) à une opération mécanique de poinçonnage.

10. Procédé selon la revendication 7, dans lequel l'étape d'imprégnation de la couverture par une autre résine thermoplastique (19) est effectuée après l'étape de soumission de la couverture à l'imprégnation par de la résine thermoplastique fondue.

11. Procédé selon la revendication 9, dans lequel l'étape d'imprégnation de la couverture par une autre résine thermoplastique (19) est effectuée après l'étape de soumission des fibres de la couverture (18) à une opération mécanique de poinçonnage.

12. Procédé selon l'une quelconque des revendications précédentes, comprenant en outre l'étape d'application, entre la couche de renfort (3) et la couche de recouvrement décorative (6), d'une couche barrière (5) faite en une bande ou feuille adhésive.

13. Procédé selon la revendication 12, dans lequel la couche barrière (5) est en matériau thermplastique, et la couche de recouvrement décorative (6) est liée au lit au moyen d'une fusion de la couche barrière (5) par chauffage.

14. Procédé selon l'une quelconque des revendications 1 à 11, dans lequel la couche de recouvrement décorative est collée au lit par une résine thermodurcissable.
